# EUROPEAN PATENT SPECIFICATION

(11) **EP 2 770 722 B1**
(45) Date of publication and mention of the grant of the patent: **20.09.2017**
(21) Application number: 14155953.4
(22) Date of filing: 20.02.2014
(51) Int. Cl.: H04N 5/217, H04N 5/232, G09G 5/377

(54) **Image displaying device**
Bildanzeigevorrichtung
Dispositif d'affichage d'images

(30) Priority: 26.02.2013 JP 2013035633
(43) Date of publication of application: 27.08.2014
(73) Proprietor: Ricoh Imaging Company, Ltd., Tokyo 174-8639 (JP)
(72) Inventor: Kawaguchi, Keiichi, Tokyo, 174-8639 (JP)
(74) Representative: Schwabe - Sandmair - Marx

(56) References cited:
- WO-A1-2010/134275
- US-A1- 2006 072 820
- US-A1- 2010 321 533
- US-A1- 2013 033 615
- US-A1- 2013 238 724

## Description

### Background of the Invention

The present invention relates to an image displaying device capable of enabling a user to visually recognize a focusing state of a subject, a corresponding method and a program to realize the method.

In general, a digital still camera is provided with a LCD (Liquid Crystal Display), for example, on a back side of a camera body thereof. A user is able to check various photographing conditions, such as, an angle of view, a white balance, exposure, a focusing state, etc., via a so-called through image displayed on the LCD. However, in general, resolution of the through image is low. Therefore, the user is not able to adequately recognize the focusing state when the user adjusts the focusing state through a manual operation. For this reason, a problem that it is difficult to accurately adjust the focusing state through a manual operation has been pointed out.

In view of such a problem, Japanese Patent Provisional Publication No. 2007-28380A (hereafter, referred to as patent document 1) discloses a digital still camera having the function of assisting user's manual operation for adjusting a focusing state. Specifically, the digital still camera described in patent document 1 is configured to assign a predetermined color to pixels along a contour line of a subject displayed on an LCD so that the contour line is appropriately highlighted regardless of resolution of the image or the pixel size. WO 2010/134275 A1 discloses a digital image processing device comprising a touch screen on which a user may perform a circle touch movement. Image features positioned inside the thus-traced circle may be scaled up.

### Summary of the Invention

When the digital still camera described in patent document 1 is set for the manual focusing mode, representation on the LCD is changed to representation of a colored contour image. Therefore, the user is not able to visually recognize a true subject image during the manual focusing operation. Even when the user achieves focusing by adjusting the contour image, the user may not be able to shoot a subject in a composition intended by the user or the user may not be able to properly shoot the subject because the user is not able to visually recognize the true subject image.

The present invention is advantageous in that it provides an image displaying device configured suitably to assist user's manual focusing operation while enabling the user to visually recognize a true subject image. In addition, the invention is directed to a corresponding method and a program to conduct said method.

According to an aspect of the invention, there is provided an image displaying device which comprises a photographing image generating unit configured to generate a photographing image by processing photographing data outputted by an image pickup device, an area designation unit configured to designate a cut-out area in the photographing image, a contour image generating unit configured to generate a contour image of the cut-out area based on a high frequency component of the cut-out area after the cut-out area is designated, a combined image generating unit configured to generate a combined image in which the contour image is combined with a part of the photographing image, and a combined image displaying unit configured to display the combined image on a display screen, e.g. an LCD, a TFTLCD or an OLED.

According to the above described configuration, a user is able to conduct manual operation for focusing while recognizing a composition of a subject and a whole composition including the subject displayed in a normal style (i.e., in true color, luminance, tone and etc.), by checking the degree of emphasis of a contour line of a contour image while visually recognizing the whole image.

The image displaying device may further comprise a ranging point combining unit configured to combine and display a predetermined ranging point on the photographing image. In this case, the area designation unit may be configured to designate an area centered at the predetermined ranging point as the cut-out area.

The image displaying device may further comprise a first operation unit. In this case, the area designation unit may be configured to designate the cut-out area in accordance with an operation to the first operation unit by a user.

The image displaying device may further comprise a ranging point combining unit configured to combine and display a predetermined ranging point on the photographing image. In this case, a position of the predetermined ranging point in the photographing image may be determined in accordance with an operation to the first operation unit by the user. The area designation unit may be configured to designate, as the cut-out area, an area centered at the position of the predetermined ranging point determined in accordance with the operation to the first operation unit by the user.

The combined image generating unit may be configured to combine the contour image on an area including the designated cut-out area centered at the predetermined ranging point.

The image displaying device may further comprise a ranging point combining unit configured to combine and display a plurality of predetermined ranging points on the photographing image. In this case, the area designation unit may be configured to designate, as the cut-out area, an area centered at a ranging point which is one of the plurality of ranging points and is used for focusing.

The combined image generating unit may be configured to combine the contour image on an area which includes the designated cut-out area and is centered at the ranging point used for focusing.

The image displaying device may further comprise a second operation unit configured to designate an area on which the contour image is combined with the photographing image. In this case, the combined image generating unit may be configured to combine the contour image on the area in the photographing image designated by an operation to the second operation unit by a user.

The image displaying device may further comprise a third operation unit configured to designate a displaying scale factor for the contour image, and a size conversion unit configured to change a displaying size of the contour image at the displaying scale factor designated by an operation to the third operation unit by a user. In this case, the combined image generating unit may be configured to combine the contour image whose displaying size is changed by the size conversion unit with the photographing image.

The contour image generating unit may be configured to generate the contour image based on a high frequency component of a luminance signal corresponding to the cut-out area designated by the area designation unit.

According to another aspect of the invention, there is provided an image displaying method, comprising the following steps: generating a photographing image by processing photographing image data outputted by an image pickup device; designating a cut-out area in the photographing image; generating a contour image of the cut-out area based on a high frequency component of the cut-out area after the cut-out area is designated; generating a combined image in which the contour image is combined with a part of the photographing image; and displaying the combined image.

According to the above described configuration, a user is able to conduct manual operation for focusing while recognizing a composition of a subject and a whole composition including the subject displayed in a normal style (i.e., in true color, luminance, tone and etc.), by checking the degree of emphasis of a contour line of a contour image while visually recognizing the whole image.

The method may further comprise: combining and displaying a predetermined ranging point on the photographing image; and designating an area centered at the predetermined ranging point as the cut-out area.

In the step of designating the cut-out area, the cut-out area may be designated in accordance with an operation to the first operation unit by a user. The method may further comprise combining and displaying a predetermined ranging point on the photographing image, wherein a position of the predetermined ranging point in the photographing image is determined in accordance with an operation initiated by the user; and designating, as the cut-out area, an area centered at the position of the predetermined ranging point determined in accordance with the operation initiated by the user.

According to another aspect of the invention, there is provided a program which, when conducted on an image displaying device including a program executing device, said program being configured to control the image displaying device to perform one of the above described methods.

### Brief Description of the Accompanying Drawings

Fig. 1 is a block diagram illustrating a configuration of a photographing apparatus according to an embodiment of the invention.
Fig. 2 is a flowchart illustrating a generating and displaying process for a focusing-assisting image according to the embodiment of the invention.
Figs. 3A to 3E are explanatory illustrations for supplementing explanations about the generating and displaying process for the focusing-assisting image according to the embodiment of the invention.
Fig. 4 illustrates an outer appearance of a back side of a camera body of the photographing apparatus in a state where the focusing-assisting image is displayed on an LCD.

### Detailed Description of the Embodiments

Hereinafter, an image displaying device, a method and a program according to an embodiment of the invention is described with reference to the accompanying drawings. In the embodiment, described below, the image displaying device is mounted on a photographing apparatus capable of obtaining a digital image. The photographing apparatus is, for example, a digital single reflex camera (having a quick return mirror) or a mirror-less single reflex camera of a lens interchangeable type, a compact digital camera, a camcorder, a mobile phone, a PHS (Personal Handy phone System), a smart phone, a feature phone or a portable game machine. Furthermore, any kind of programming language can be used.

### Configuration of Photographing Apparatus

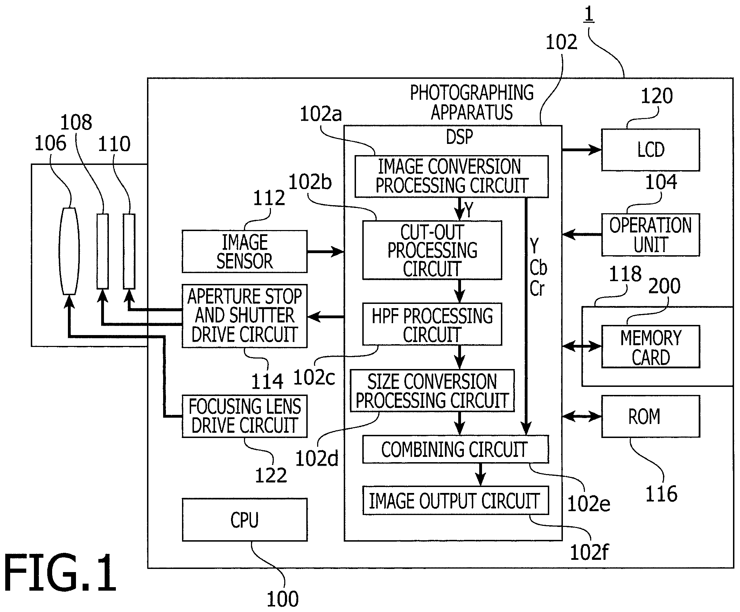

Fig. 1 is a block diagram illustrating a configuration of a photographing apparatus 1 according to the embodiment. As shown in Fig. 1, the photographing apparatus 1 includes a CPU (Central Processing Unit) 100, a DSP (Digital Signal Processor) 102, an operation unit 104, a photographing lens 106, an aperture stop 108, a shutter 110, an image sensor 112, an aperture stop and shutter drive circuit 114, a ROM (Read Only Memory) 116, a memory card adapter 118, an LCD (Liquid Crystal Display) 120 and a focusing lens drive circuit 122. Although actually the photographing lens 106 is a focus variable lens including a plurality of lenses, in Fig. 1 the photographing lens 106 is illustrated as a single lens for the sake of simplicity. The memory 116 can also be an EPROM, and EEPROM or a different data storage device suitable to store control data reliably.

The operation unit 104 includes various switches for allowing the user to operate the photographing apparatus 1, such as a power switch, a release switch, a mode setting switch, a cross key, a dial key and a zoom key. When the user presses the power switch, power is supplied from a battery (not shown) to the various circuits of the photographing apparatus 1 via power lines. After power is supplied, the CPU 100 accesses the ROM 116 to read out a control program, and loads the control program onto an internal memory (not shown). Then, by executing the loaded control program, the CPU 100 totally controls the photographing apparatus 1. In Fig. 1, wiring between the CPU 100 and the other circuits are omitted for the sake of simplicity.

The DSP 102 drives and controls the aperture stop 108 and the shutter 110 via the aperture stop and shutter drive circuit 114 so that proper exposure measured by a TTL (Through The Lens) photometer (not shown) provided in the photographing apparatus 1 can be achieved. More specifically, the drive and control for the aperture stop 108 and the shutter 110 is executed based on the AE function mode, such as program AE (Automatic Exposure), shutter speed-priority AE or aperture priority AE, designated by the mode setting switch. The DSP 102 executes AF (Autofocus) contral as well as the AE control, and drives and controls the photographing lens 106 via the focusing lens drive circuit 122. As the AF control, it is possible to use the active autofocus, the phase detection autofocus or the contrast detection autofocus. Since these AE and AF control and configuration are known, detailed explanations thereof are omitted.

A light beam from a subject passes through the photographing lens 106, the aperture stop 108 and the shutter 110, and is received by the image sensor 112. The image sensor 112 is, for example, a single-chip color CCD (Charge Coupled Device) image sensor or a CMOS (Complementary Metal Oxide Semiconductor) image sensor having a Bayer type pixel array, and is configured to accumulate charges corresponding to the light amount of an optical image formed at each pixel on an imaging surface thereof, and converts the accumulated charges into an electric signal. The DSP 102 executes predetermined signal processing including color interpolation, a matrix operation and Y/C separation, and generates a luminance signal Y and color-difference signals Cb and Cr, and then compresses them in a predetermined format such as JPEG (Joint Photographic Experts Group). The compressed image signal (photographed image data) is then stored in a memory card 200 inserted into the memory card adapter 118. The DSP 102 buffers, on a basis of a frame, the signal which has been subjected to the Y/C separation, by storing the signal in a frame memory (not shown). The DSP 102 sweeps out the buffered signal at predetermined timing from each frame memory, converts the buffered signal into an image signal to generate an image, and then displays the image on the LCD 120. The user is able to visually recognize a real time through image photographed at proper luminance and focus based on the AE control and the AF control.

### (Generation and Display of Focusing-Assisting Image by Photographing Apparatus)

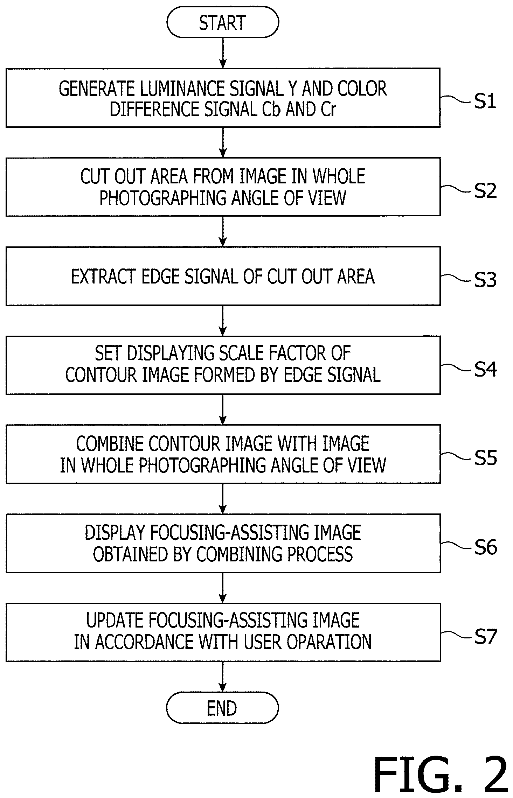

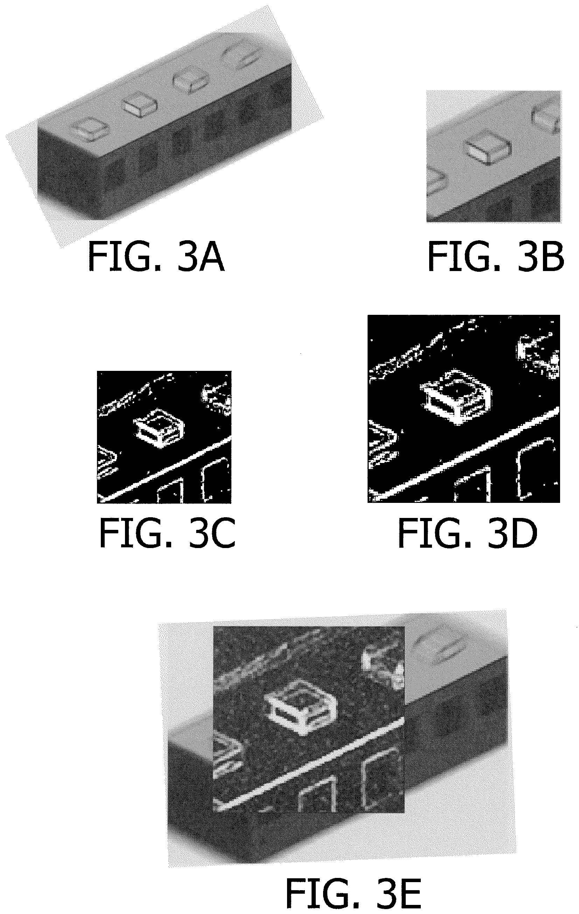

When the AF function is stopped by a user operation through the operation unit 104, the photographing apparatus 1 moves to a manual focus mode. As a result, the user becomes able to adjust the focus through a manual operation. In this embodiment, when the photographing apparatus 1 moves to the manual focus mode, a focusing-assisting image is displayed on the LCD 120. The focusing-assisting image is an image for assisting the manual focusing operation by the user. Hereafter, generating and displaying of the focusing-assisting image are explained. Fig. 2 is a flowchart illustrating a generating and displaying process for the focusing-assisting image. Figs. 3A to 3E are explanatory illustrations for supplementing the explanations about the generating and displaying process for the focusing-assisting image shown in Fig. 2. The generating and displaying process for the focusing-assisting image executed initially after moving to the manual focus mode is explained with reference to step S1 (image conversion process) to step S6 (displaying of focusing-assisting image) of Fig. 2, and an updating and displaying process for the focusing-assisting image executed in accordance with a user operation is explained with reference to step S7 (updating of the focusing-assisting image in accordance with an operation) of Fig. 2.

### S1 in Fig. 2 (Image Conversion Process)

As shown in Fig. 1, the DSP 102 includes an image conversion processing circuit 102a. In Fig. 1, of various blocks constituting the DSP 102, only blocks relating to execution of the generating and displaying process are illustrated for the sake of simplicity. The image conversion processing circuit 102a executes predetermined signal processing including the color interpolation, the matrix operation and the Y/C separation for the electric signal (photographed data) inputted from the image sensor 112, to generate the luminance, signal Y and the color difference signals Cb and Cr.

As shown in Fig. 1, the DSP 102 includes a cut-out processing circuit 102b and a combining circuit 102e. The image conversion processing circuit 102a outputs the luminance signal Y to the cut-out processing circuit 102b, and outputs the luminance signal Y and the color difference signals Cb and Cr to the combining circuit 102e. Fig. 3A illustrates, as an explanatory illustration for explaining the step S1 (the image conversion process), a subject image (a monochrome image) generated when the luminance signal Y outputted from the image conversion processing circuit 102a is used (i.e., without using the color differences signals Cb and Cr).

### S2 in Fig. 2 (Area Cut-out Process)

The cut-out processing circuit 102b extracts a part of the luminance signal Y inputted from the image conversion processing circuit 102a for each frame. Specifically, the cut-out processing circuit 102b designates an area in the subject image as a cut-out area, and extracts a part of the luminance signal Y corresponding to the designated area. Let us consider, for example, the case where a ranging point is a single point situated at the center. In this case, the cut-out processing circuit 102b designates, as the cut-out area, an area (a central area of the subject image) having a predetermined size centering the ranging point (the single point at the center), and extracts the part of the luminance signal Y corresponding to the designated area. Fig. 3B illustrates, as an explanatory illustration for explaining the area cut-out processing process in step S2, a cut-out image generated by using the luminance signal Y outputted by the cut-out processing circuit 102b.

### S3 in Fig. 2 (HPF (High Pass Filter) Process)

As shown in Fig. 1, the DSP 102 includes an HPF processing circuit 102c. The HPF processing circuit 102c executes an HPF (High Pass Filter) process for the luminance signal Y inputted from the cut-out processing circuit 102b, and extracts a high frequency component (an edge signal E) of the luminance signal Y. Fig. 3C illustrates, as an explanatory illustration for explaining the HPF process in step S3, a contour image of the subject generated by using the edge signal E outputted from the HPF processing circuit 102c.

### S4 in Fig. 2 (Size Conversion Process)

As shown in Fig. 1, the DSP 102 includes a size conversion processing circuit 102d. The size conversion processing circuit 102d designates a displaying scale factor of the contour image. Initially, the displaying scale factor is set for 1.2, for example. The size conversion processing circuit 102d processes the edge signal E so that the size of the contour image which is formed of the edge signal E inputted from the HPF processing circuit 102c is changed by the designated scale factor. Fig. 3D illustrates, as an explanatory illustration for explaining the size conversion process in step S4, a contour image after being subjected to the size conversion (e.g. at the scale factor of 1.2) by the size conversion processing circuit 102d.

### S5 in Fig. 2 (Combining Process)

To the combining circuit 102e, the edge signal E outputted from the size conversion processing circuit 102d as well as the luminance signal Y and the color difference signals Cb and Cr outputted from the image conversion processing circuit 102a are inputted. The edge signal E is a signal of the contour image constituting a partial area in the photographing angle of view. The luminance signal Y and the color difference signals Cb and Cr are signals constituting the image in the whole photographing angle of view. In the following, an image constituted by the edge signal E is referred to as a "contour image (E)", and an image constituted by the luminance signal Y and the color difference signals Cb and Cr is referred to as a "whole image (YC)". The combining circuit 102e generates a combined image (a focusing-assisting image) by combining the contour image (E) with the whole image (YC). An area on the whole image (YC) on which the contour image (E) is combined is, for example, an area including the cut-out area designated by the cut-out processing circuit 102b in the area cut-out process of step S2 in Fig. 2. More specifically, the contour image (E) is combined on the whole image (YC) at the position where the center of the contour image (E) coincides with the center of the cut-out area.

### S6 in Fig 2 (Displaying of Focusing-assisting Image)

As shown in Fig. 1, the DSP 102 includes an image output circuit 102f. The image output circuit 102f executes a buffering process for the signal of the focusing-assisting image inputted from the combining circuit 102e, sweeps out the buffered data at predetermined timing to convert it in a predetermined output format, and outputs it to the LCD 120.

By thus executing the steps S1 (image conversion process) to S6 (displaying of focusing-assisting image) in Fig. 2 after moving to the manual focus mode, the focusing-assisting image is displayed on the LCD 120 as a through image. Fig. 3E illustrates an example of the focusing-assisting image displayed on the LCD 120. According to Fig. 3E, the focusing-assisting image covers the whole photographing angle of view (the whole image (YC)) in addition to including an image (the contour image (E)) in which a contour line of the area at which the focusing should be achieved is highlighted. Therefore, the user is able to conduct manual operation for focusing while recognizing the composition of the subject and the whole composition including the subject displayed in a normal style (i.e., in true color, luminance, tone and etc.), by checking the degree of emphasis of the contour line of the contour image (E) while visually recognizing the whole image (YC). As described above, the photographing apparatus 1 according to the embodiment is able to provide the user with the information which enables the user to easily recognize the whole composition and to visually recognize the focusing state.

### S7 in Fig. 2 (Updating of Focusing-assisting Image in accordance with Operation)

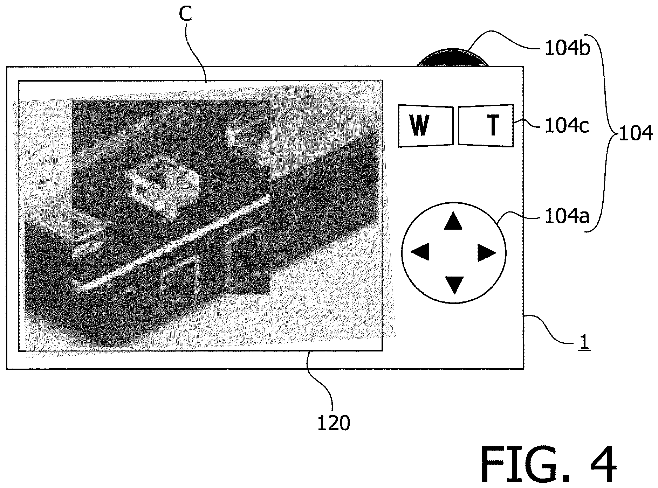

Fig. 4 illustrates an outer appearance of a back side of the camera body of the photographing apparatus 1 in a state where the focusing-assisting image is displayed on the LCD 120. As shown in Fig. 4, on the back side of the camera body of the photographing apparatus 1, the LCD 120 and the operation unit 104 (a cross key 104a, a dial key 104b and a zoom key 104c) are provided. In Fig. 4, of switches and keys constituting the operation unit 104, only switches and keys relating to step S7 (updating of the focusing-assisting image in accordance with an operation) are illustrated for the sake of the simplicity.

### (Operation for Changing Cut-out Area)

Let us consider, for example, the case where one of parts of the cross-key 104a is pressed long by the user. In this case, the combining circuit 102e stops the combining process of combining the whole image (YC) and the contour image (E), and alternatively outputs a combined image in which a cursor C is combined with the whole image (E). As a result, onscreen representation of the LCD 120 is changed from the focusing-assisting image in which the contour image (E) is combined with the whole image (YC) to the combined image in which the cursor C is combined with the whole image (YC).

The position of the cursor C on the whole image (YC) represents the ranging point (here, one ranging point), and can be moved by the user operation to the cross key 104a. When a confirmation key (not shown) is pressed by the user, the cut-out processing circuit 102b designates an area having a predetermined size and centering at the cursor C as a cut-out area, and extracts a part of the luminance signal Y corresponding to the designated area. As a result, the focusing-assisting image having the contour image (E) of the area designated by the user is displayed on the LCD 120.

The size (range) of the cut-out area cut out by the cut-out processing circuit 102b is not limited to the predetermined size (range). Let us consider, for example, the case where the dial key 104b is operated by the user. In this case, the cut-out processing circuit 102b changes the size (range) of the cut-out area in response to the operation to the dial key 104b. As a result, the size (range) of the contour image (E) displayed on the LCD 120 is changed.

By changing (the position or the range of) the cut-out area to be cut out by the cut-out processing circuit 102b, the user is able to display, on the LCD 120, the contour image (E) of the subject for which the focusing should be achieved in the photographing angle of view.

### (Operation for Changing Displaying Position of Contour Image (E))

Even when the position and the size (range) of the contour image (E) are changed, the area on the whole image (YC) at which the contour image (E) is combined is an area including the cut-out area designated by the cut-out processing circuit 102b as explained in step S5 (combining process) in Fig. 2. However, the combing area (displaying position of the contour image (E)) can be changed in response to the user operation to the cross key 104a. Let us consider, for example, the case where the cross key 104a is operated (not the case where the cross key 104a is pressed long) during displaying of the focusing-assisting image. In this case, the combining circuit 102e updates the combining area of the contour image (E) in response to the operation to the cross key 104a. As a result, the displaying position of the contour image (E) displayed on the LCD 120 is changed.

By changing the displaying position of the contour image (E) formed by the combining circuit 102e, the user becomes able to visually recognize, in a normal style (i.e., in true color, luminance, tone and etc.), for example, the subject which has been hidden behind the contour image (E) while checking the degree of emphasis of the contour line of the contour image (E).

### (Operation for Changing Displaying Scale Factor (Display Size) of Contour Image (E))

Let us consider, for example, the case where the zoom key 104c is operated by the user. In this case, the size conversion processing circuit 102d changes the settings of the displaying scale factor (display size) of the contour image (E) in response to an operation to the zoom key 104c. The combining circuit 102e combines the contour image (E), whose displaying scale factor (the displaying size) has been changed, with the whole image (YC). As a result, on the whole image (YC), the contour image (E) is displayed in an enlarged size, in an equal size or in a reduced size.

By enlarging the contour image (E), the user becomes able to visually recognize the degree of emphasis of a contour line more easily. Furthermore, by reducing the contour image (E), the user becomes able to visually recognize, in a normal style (i.e., in true color, luminance, tone and etc.), for example, the subject which has been hidden behind the contour image (E).

The foregoing is the exemplary embodiment of the invention. It is understood that the invention is not limited to the above described embodiment, but can be varied within the scope of the invention. For example, combinations of the above described exemplary embodiment and variations derived therefrom are also included in the scope of the invention.

For example, in the above described embodiment, the focusing-assisting image is displayed during the manual operation for focus adjustment; however, in another embodiment the focusing-assisting image may be displayed during autofocus.

Let us consider, for example, the case where the AF ranging point is a single point at the center. In this case, the cut-out processing circuit 102b designates an area having a predetermined size and centering at the AF ranging point (the single point at the center) as the cut-out area. The combining circuit 102e combines the contour image (E), for example, on an area including the cut-out area. Let us further consider the case of multipoint ranging where a plurality of AF ranging points is laid out. In this case, the cut-out processing circuit 102b designates, as the cut-out area, an area having a predetermined size and centering at an AF ranging point which is one of the plurality of AF ranging points and is used for focusing. In this case, the combining circuit 102e combines the contour image (E) on an area including the cut-out area.

As described above, when the focusing-assisting image is displayed during execution of autofocus, the user is able to check the AF focusing state while recognizing the composition of the subject and the whole composition including the subject displayed in a normal style (i.e., in true color, luminance, tone and etc.).

## Claims

1. An image displaying device (1), comprising:
a photographing image generating unit configured to generate a photographing image by processing photographing data outputted by an image pickup device (102, 106, 108, 110, 112, 114, 122);
an area designation unit configured to designate a cut-out area in the photographing image;
a contour image generating unit configured to generate a contour image of the cut-out area based on a high frequency component of the cut-out area after the cut-out area is designated;
a combined image generating unit (102e) configured to generate a combined image in which the contour image is combined with a part of the photographing image; and
a combined image displaying unit (120) configured to display the combined image on a display screen.

2. The image displaying device (1) according to claim 1,
further comprising a ranging point combining unit configured to combine and display a predetermined ranging point on the photographing image,
wherein the area designation unit is configured to designate an area centered at the predetermined ranging point as the cut-out area.

3. The image displaying device (1) according to claim 1,
further comprising a first operation unit,
wherein the area designation unit is configured to designate the cut-out area in accordance with an operation to the first operation unit by a user.

4. The image displaying device (1) according to claim 3,
further comprising a ranging point combining unit configured to combine and display a predetermined ranging point on the photographing image,
wherein:
a position of the predetermined ranging point in the photographing image is determined in accordance with an operation to the first operation unit by the user; and
the area designation unit is configured to designate, as the cut-out area, an area centered at the position of the predetermined ranging point determined in accordance with the operation to the first operation unit by the user.

5. The image displaying device (1) according to claim 2 or 4,
wherein the combined image generating unit (102e) is configured to combine the contour image on an area including the designated cut-out area centered at the predetermined ranging point.

6. The image displaying device (1) according to claim 1,
further comprising a ranging point combining unit configured to combine and display a plurality of predetermined ranging points on the photographing image,
wherein the area designation unit is configured to designate, as the cut-out area, an area centered at a ranging point which is one of the plurality of ranging points and is used for focusing.

7. The image displaying device (1) according to claim 6,
wherein the combined image generating unit (102e) is configured to combine the contour image on an area which includes the designated cut-out area and is centered at the ranging point used for focusing.

8. The image displaying device (1) according to any of claims 1 to 4 and 6,
further comprising a second operation unit configured to designate an area on which the contour image is combined with the photographing image,
wherein the combined image generating unit (102e) is configured to combine the contour image on the area in the photographing image designated by an operation to the second operation unit by a user.

9. The image displaying device (1) according to any of claims 1 to 8,
further comprising:
a third operation unit configured to designate a displaying scale factor for the contour image; and
a size conversion unit (102d) configured to change a displaying size of the contour image at the displaying scale factor designated by an operation to the third operation unit by a user,
wherein the combined image generating unit (102e) is configured to combine the contour image whose displaying size is changed by the size conversion unit (102d) with the photographing image.

10. The image displaying device according to any of claims 1 to 9,
wherein the contour image generating unit is configured to generate the contour image based on a high frequency component of a luminance signal corresponding to the cut-out area designated by the area designation unit.

11. An image displaying method, comprising the following steps:
generating a photographing image by processing photographing image data outputted by an image pickup device (102, 106, 108, 110, 112, 114, 122);
designating a cut-out area in the photographing image;
generating a contour image of the cut-out area based on a high frequency component of the cut-out area after the cut-out area is designated;
generating a combined image in which the contour image is combined with a part of the photographing image; and
displaying the combined image.

12. The method according to claim 11, further comprising:
combining and displaying a predetermined ranging point on the photographing image, and
designating an area centered at the predetermined ranging point as the cut-out area.

13. The method according to claim 11, further comprising:
a first operation unit,
wherein, in the step of designating the cut-out area, the cut-out area is designated in accordance with an operation to the first operation unit by a user, wherein
combining and displaying a predetermined ranging point on the photographing image,
wherein:
a position of the predetermined ranging point in the photographing image is determined in accordance with an operation initiated by the user; and
designating, as the cut-out area, an area centered at the position of the predetermined ranging point determined in accordance with the operation initiated by the user.

14. A program which, when conducted on an image displaying device (1) including a program executing device, said program being configured to control the image displaying device to perform the method according to one of claims 11 to 13.

## Patentansprüche

1. Bildanzeigevorrichtung (1), die Folgendes umfasst:
eine fotografische Bilderzeugungseinheit, die konfiguriert ist, ein fotografisches Bild zu erzeugen, indem fotografische Daten verarbeitet werden, die durch eine Bildaufnahmevorrichtung (102, 106, 108, 110, 112, 114, 122) ausgegeben werden;
eine Flächenkennzeichnungseinheit, die konfiguriert ist, eine ausgeschnittene Fläche in dem fotografischen Bild zu kennzeichnen;
eine Konturbilderzeugungseinheit, die konfiguriert ist, ein Konturbild der ausgeschnittenen Fläche auf der Grundlage einer Hochfrequenzkomponente der ausgeschnittenen Fläche zu erzeugen, nachdem die ausgeschnittene Fläche bezeichnet worden ist;
eine Kombinationsbilderzeugungseinheit (102e), die konfiguriert ist, ein Kombinationsbild zu erzeugen, in dem das Konturbild mit einem Teil des fotografischen Bildes kombiniert ist, und
eine Kombinationsbildanzeigeeinheit (120), die konfiguriert ist, das Kombinationsbild auf einem Anzeigebildschirm anzuzeigen.

2. Bildanzeigevorrichtung (1) nach Anspruch 1,
die ferner eine Entfernungsmesspunktkombinationseinheit umfasst, die konfiguriert ist, einen vorbestimmten Entfernungsmesspunkt auf dem fotografischen Bild zu kombinieren und anzuzeigen,
wobei die Flächenkennzeichnungseinheit konfiguriert ist, eine Fläche, die an dem vorbestimmten Entfernungsmesspunkt zentriert ist, als die ausgeschnittene Fläche zu kennzeichnen.

3. Bildanzeigevorrichtung (1) nach Anspruch 1,
die ferner eine erste Betriebseinheit umfasst,
wobei die Flächenkennzeichnungseinheit konfiguriert ist, die ausgeschnittene Fläche in Übereinstimmung mit einem Vorgang an der ersten Betriebseinheit durch einen Anwender zu kennzeichnen.

4. Bildanzeigevorrichtung (1) nach Anspruch 3,
die ferner eine Entfernungsmesspunktkombinationseinheit umfasst, die konfiguriert ist, einen vorbestimmten Entfernungsmesspunkt auf dem fotografischen Bild zu kombinieren und anzuzeigen,
wobei:
eine Position des vorbestimmten Entfernungsmesspunkts in dem fotografischen Bild in Übereinstimmung mit einem Vorgang an der ersten Betriebseinheit durch den Anwender ist, und
die Flächenkennzeichnungseinheit konfiguriert ist, als die ausgeschnittene Fläche eine Fläche zu kennzeichnen, die an der Position des vorbestimmten Entfernungsmesspunktes zentriert ist, der in Übereinstimmung mit dem Vorgang an der ersten Betriebseinheit durch den Anwender bestimmt worden ist.

5. Bildanzeigevorrichtung (1) nach Anspruch 2 oder 4,
wobei die Kombinationsbilderzeugungseinheit (102e) konfiguriert ist, das Konturbild auf einer Fläche zu kombinieren, die die ausgeschnittene Fläche enthält, die an dem vorbestimmten Entfernungsmesspunkt zentriert ist.

6. Bildanzeigevorrichtung (1) nach Anspruch 1,
die ferner eine Entfernungsmesspunktkombinationseinheit umfasst, die konfiguriert ist, mehrere vorbestimmte Entfernungsmesspunkte auf dem fotografischen Bild zu kombinieren und anzuzeigen,
wobei die Flächenkennzeichnungseinheit konfiguriert ist, als die ausgeschnittene Fläche eine Fläche zu kennzeichnen, die an einem Entfernungsmesspunkt zentriert ist, der einer der mehreren Entfernungsmesspunkte ist und zum Fokussieren verwendet wird.

7. Bildanzeigevorrichtung (1) nach Anspruch 6,
wobei die Kombinationsbilderzeugungseinheit (102e) konfiguriert ist, das Konturbild auf einer Fläche zu kombinieren, die die bezeichnete ausgeschnittene Fläche enthält und an dem Entfernungsmesspunkt, der zum Fokussieren verwendet wird, zentriert ist.

8. Bildanzeigevorrichtung (1) nach einem der Ansprüche 1 bis 4 und 6,
die ferner eine zweite Betriebseinheit umfasst, die konfiguriert ist, eine Fläche zu kennzeichnen, auf der das Konturbild mit dem fotografischen Bild kombiniert wird,
wobei die Kombinationsbilderzeugungseinheit (102e) konfiguriert ist, das Konturbild auf der Fläche in dem fotografischen Bild zu kombinieren, die durch einen Vorgang an der zweiten Betriebseinheit durch einen Anwender bezeichnet ist.

9. Bildanzeigevorrichtung (1) nach einem der Ansprüche 1 bis 8, die ferner Folgendes umfasst:
eine dritte Betriebseinheit, die konfiguriert ist, einen Anzeigemaßstabsfaktor für das Konturbild zu kennzeichnen, und
eine Größenumsetzungseinheit (102d), die konfiguriert ist, eine Anzeigegröße des Konturbildes mit dem Anzeigemaßstabsfaktor zu ändern, der durch einen Vorgang an der dritten Betriebseinheit durch einen Anwender bezeichnet ist,
wobei die Kombinationsbilderzeugungseinheit (102e) konfiguriert ist, das Konturbild, dessen Anzeigegröße durch die Größenumsetzungseinheit (102d) geändert wird, mit dem fotografischen Bild zu kombinieren.

10. Bildanzeigevorrichtung nach einem der Ansprüche 1 bis 9,
wobei die Konturbilderzeugungseinheit konfiguriert ist, das Konturbild auf der Grundlage einer Hochfrequenzkomponente eines Leuchtdichtesignals zu erzeugen, das der ausgeschnittenen Fläche entspricht, die durch die Flächenkennzeichnungseinheit bezeichnet ist.

11. Bildanzeigeverfahren, das die folgenden Schritte umfasst:
Erzeugen eines fotografischen Bildes durch Verarbeiten von fotografischen Bilddaten, die durch eine Bildaufnahmevorrichtung (102, 106, 108, 110, 112, 114, 122) ausgegeben werden;
Kennzeichnen einer ausgeschnittenen Fläche in dem fotografischen Bild;
Erzeugen eines Konturbildes der ausgeschnittenen Fläche auf der Grundlage einer Hochfrequenzkomponente der ausgeschnittenen Fläche, nachdem die ausgeschnittene Fläche bezeichnet worden ist;
Erzeugen eines Kombinationsbildes, in dem das Konturbild mit einem Teil des fotografischen Bildes kombiniert ist, und
Anzeigen des kombinierten Bildes.

12. Verfahren nach Anspruch 11, das ferner Folgendes umfasst:
Kombinieren und Anzeigen eines vorbestimmten Entfernungsmesspunktes auf dem fotografischen Bild und
Kennzeichnen einer Fläche, die an dem vorbestimmten Entfernungsmesspunkt zentriert ist, als die ausgeschnittene Fläche.

13. Verfahren nach Anspruch 11, das ferner Folgendes umfasst:
eine erste Betriebseinheit;
wobei in dem Schritt zum Bezeichnen der ausgeschnittenen Fläche die ausgeschnittene Fläche in Übereinstimmung mit einem Vorgang an der ersten Betriebseinheit durch einen Anwender bezeichnet wird, wobei
ein vorbestimmter Entfernungsmesspunkt auf dem fotografischen Bild kombiniert und angezeigt wird,
wobei:
eine Position des vorbestimmten Entfernungsmesspunktes in dem fotografischen Bild in Übereinstimmung mit einem Vorgang durch den Anwender bestimmt wird, und
eine Fläche, die an der Position des vorbestimmten Entfernungsmesspunktes zentriert ist, der in Übereinstimmung mit dem Vorgang bestimmt ist, der durch den Anwender initiiert wird, als die ausgeschnittene Fläche bezeichnet wird.

14. Programm, das dann, wenn es auf einer Bildanzeigevorrichtung (1), die eine Programmausführungsvorrichtung enthält, ausgeführt wird, konfiguriert ist, die Bildanzeigevorrichtung zu steuern, das Verfahren nach einem der Ansprüche 11 bis 13 durchzuführen.

## Revendications

1. Dispositif d'affichage d'images (1) comprenant :
une unité de génération d'image photographique configurée pour générer une image photographique en traitant des données photographiques sorties par un dispositif de prise d'images (102, 106, 108, 110, 112, 114, 122) ;
une unité de désignation de zone configurée pour désigner une zone de découpe dans l'image photographique ;
une unité de génération d'image de contour configurée pour générer une image de contour de la zone de découpe en se fondant sur une composante haute fréquence de la zone de découpe, après que la zone de découpe a été désignée ;
une unité de génération d'image combinée (102e) configurée pour générer une image combinée dans laquelle une image de contour est combinée avec une partie de l'image photographique ; et
une unité d'affichage d'image combinée (120) configurée pour afficher l'image combinée sur un écran d'affichage.

2. Dispositif d'affichage d'image (1) selon la revendication 1,
comprenant en outre une unité de combinaison de point télémétrique configurée pour combiner et afficher un point télémétrique prédéterminé sur l'image photographique,
où l'unité de désignation de zone est configurée pour désigner une zone centrée sur le point télémétrique prédéterminé en tant que zone de découpe.

3. Dispositif d'affichage d'image (1) selon la revendication 1,
comprenant en outre une première unité de commande,
où l'unité de désignation de zone est configurée pour désigner la zone de découpe conformément à un actionnement de la première unité de commande par un utilisateur.

4. Dispositif d'affichage d'image (1) selon la revendication 3,
comprenant en outre une unité de combinaison de point télémétrique configurée pour combiner et afficher un point télémétrique prédéterminé sur l'image photographique,
où
une position du point télémétrique prédéterminé dans l'image photographique est déterminée conformément à un actionnement de la première unité de commande par l'utilisateur ; et
l'unité de désignation de zone est configurée pour désigner, en tant que zone de découpe, une zone centrée sur la position du point télémétrique prédéterminé déterminée conformément à l'actionnement de la première unité de commande par l'utilisateur.

5. Dispositif d'affichage d'image (1) selon la revendication 2 ou 4,
où l'unité de génération d'image combinée (102e) est configurée pour combiner l'image de contour avec une zone incluant la zone de découpe désignée centrée sur le point télémétrique prédéterminé.

6. Dispositif d'affichage d'image (1) selon la revendication 1,
comprenant en outre une unité de combinaison de point télémétrique configurée pour combiner et afficher une pluralité de points télémétriques prédéterminés sur l'image photographique,
où l'unité de désignation de zone est configurée pour désigner, en tant que zone de découpe, une zone centrée sur un point télémétrique faisant partie d'une pluralité de points télémétriques et utilisé pour la mise au point.

7. Dispositif d'affichage d'image (1) selon la revendication 6,
où l'unité de génération d'image combinée (102e) est configurée pour combiner l'image de contour avec une zone qui inclut la zone de découpe désignée et est centrée sur le point télémétrique pour la mise au point.

8. Dispositif d'affichage d'image (1) selon l'une quelconque des revendications 1 à 4 et 6,
comprenant en outre une seconde unité de commande configurée pour désigner une zone dans laquelle l'image de contour est combinée avec l'image photographique,
où l'unité de génération d'image combinée (102e) est configurée pour combiner l'image de contour avec la zone dans l'image photographique désignée par un actionnement de la seconde unité de commande par un utilisateur.

9. Dispositif d'affichage d'image (1) selon l'une quelconque des revendications 1 à 8,
comprenant en outre :
une troisième unité de commande configurée pour désigner un facteur d'échelle d'affichage pour l'image de contour ; et
une unité de conversion de taille (102d) configurée pour changer une taille d'affichage de l'image de contour selon le facteur d'échelle d'affichage désigné par un actionnement de la troisième unité de commande par un utilisateur,
où l'unité de génération d'image combinée (102e) est configurée pour combiner l'image de contour dont la taille d'affichage est modifiée par l'unité de conversion de taille (102d) avec l'image photographique.

10. Dispositif d'affichage d'image selon l'une quelconque des revendications 1 à 9,
où l'unité de génération d'image de contour est configurée pour générer l'image de contour en se fondant sur une composante haute fréquence d'un signal de luminance correspondant à la zone de découpe désignée par l'unité de désignation de zone.

11. Procédé d'affichage d'image, comprenant les étapes suivantes consistant à :
générer une image photographique en traitant des données photographiques sorties par un dispositif de prise d'images (102, 106, 108, 110, 112, 114, 122) ;
désigner une zone de découpe dans l'image photographique ;
générer une image de contour de la zone de découpe en se fondant sur une composante haute fréquence de la zone de découpe, après que la zone de découpe a été désignée ;
générer une image combinée dans laquelle l'image de contour est combinée avec une partie de l'image photographique ; et
afficher l'image combinée.

12. Procédé selon la revendication 11, comprenant en outre les étapes consistant à :
combiner et afficher un point télémétrique prédéterminé sur l'image photographique, et
désigner une zone centrée sur le point télémétrique prédéterminé en tant que zone de découpe.

13. Procédé selon la revendication 11, comprenant en outre :
une première unité de commande,
où, lors de l'étape de désignation de zone de découpe, la zone de découpe est désignée conformément à un actionnement de la première unité de commande par un utilisateur, où
un point télémétrique prédéterminé est combiné et affiché sur l'image photographique,
où
une position du point télémétrique prédéterminé dans l'image photographique est déterminée conformément à un actionnement par l'utilisateur ; et
une zone centrée sur la position du point télémétrique prédéterminé, déterminé conformément à l'actionnement par l'utilisateur, est désignée en tant que zone de découpe.

14. Programme qui, lorsqu'il est exécuté sur un dispositif d'affichage d'image (1) incluant un dispositif d'exécution de programme, est configuré pour commander le dispositif d'affichage d'image de manière à mettre en oeuvre le procédé selon l'une des revendications 11 à 13.
